# FASCICULE DE BREVET EUROPEEN

(11) **EP 1 308 404 B1**
(45) Date de publication et mention de la délivrance du brevet: **11.08.2004**
(21) Numéro de dépôt: 02354152.7
(22) Date de dépôt: 04.10.2002
(51) Int. Cl.: B65G 15/32, B65G 15/44

(54) **Courroie à crête en matière plastique pour le convoyage et le transport de divers articles ou matériaux**
Kunststoff-Förderband mit Rippe zum Fördern von Gegenständen oder Werkstoffen
Plastic conveyor belt with ridge for conveying articles on materials

(30) Priorité: 16.10.2001 FR 0113314
(43) Date de publication de la demande: 07.05.2003
(73) Titulaire: Mafdel, 38080 Saint Alban de Roche (FR)
(72) Inventeur: Jouffray, Jean-Claude, 38080 Saint Alban de Roche (FR)
(74) Mandataire: Hecké, Gérard

(56) Documents cités:
- DE-A- 10 028 831
- FR-A- 2 265 637

## Description

### Domaine technique de l'invention

L'invention est du domaine des courroies transporteuses pour convoyeur. Elle a pour objet une courroie monobloc en matière plastique prévue pour être refermée en boucle sur elle-même, en vue du convoyage en continu d'articles ou de pièces.

On connaît dans le domaine du convoyage d'articles, des courroies monoblocs en matière plastique. On relèvera dès à présent, pour préciser l'environnement de l'invention et les problèmes qu'elle cherche à résoudre, que de telles courroies sont à distinguer des courroies organisées en maillons, leur caractère monobloc visant à réduire leur coût d'obtention et à faciliter leur utilisation sur site. Ces courroies comprennent un corps allongé prévu pour être refermé en boucle sur lui-même, et aménagé pour son entraînement par des moyens moteurs. Par exemple, le corps est de section trapézoïdale et/ou comporte un crantage, pour coopérer avec des organes d'entraînement, tels que flasques ou roues crantées. Le crantage sert à assouplir les courroies.

Selon un cas particulier d'utilisation de ces courroies, celles-ci sont destinées au convoyage d'articles à travers un poste de traitement visant au revêtement de leur surface. Par exemple dans l'industrie du bâtiment, ces courroies sont utilisées pour acheminer des articles, tels que des carreaux ou des tuiles, en vue d'un émaillage ou de l'apposition d'une couche de peinture ou de vernis. Un problème posé réside dans le fait que les articles étant soumis à une projection d'un produit de revêtement, la courroie est elle-même soumise à ce traitement. Il en résulte que la surface de la courroie réservée à la portance des articles est salie, avec pour conséquence de reporter ces salissures sous les articles suivants qu'elle convoie. Ces salissures présentes sous les articles, sont ensuite causes de pollution du poste de traitement, notamment à l'intérieur du four de cuisson.

### Etat de la technique

II a déjà été proposé par l'art antérieur de doter de telles courroies d'une crête effilée vers le haut, pour réduire la surface de portance des articles. Ces crêtes sont ménagées au sommet du corps de la courroie, et sont relativement massives à leur base pour leur conférer une résistance satisfaisante à l'encontre du poids des articles.

Il résulte de la présence de la crête un accroissement de la hauteur globale de la section de la courroie, avec pour conséquence une tendance à fléchir, voire se coucher, sur les roues avec lesquelles elles coopèrent pour leur entraînement.

Il résulte aussi de la présence de la crête, la nécessité de les conditionner sur un touret pour éviter, lorsqu'elles sont stockées, leur déformation spontanée qui est difficilement réversible.

Il résulte enfin de la présence de la crête, un accroissement de la masse globale de la courroie, qui entraîne une rigidification inopportune de celle-ci.

### Objet de l'invention

Le but de la présente invention est de remédier à ces inconvénients, et de proposer des perfectionnements aux courroies monoblocs en matière plastique qui comportent une crête, pour le convoyage en continu d'articles notamment.

La démarche inventive de la présente invention telle que définie dans la revendication 1 a consisté dans sa généralité à proposer une courroie à crête, dans laquelle le corps et la crête sont en matière différente et respective, la matière de la crête étant plus souple que celle du corps.

Le rapport de dureté entre le corps et la crête est de préférence compris entre 1,1 et 1,6.

Ces dispositions permettent d'obvier aux inconvénients susvisés, en proposant une courroie dont la déformabilité tend à être équivalente à celle d'une même courroie exempte de crête.

### Description sommaire des dessins

La présente invention sera mieux comprise et des détails en relevant apparaîtront, à la description qui va en être faite de formes préférées de réalisation, en relation avec les figures de la planche annexée, dans laquelle :
Les fig.1 à fig.4 sont des illustrations en perspective de tronçons de courroies selon diverses variantes respectives de réalisation de l'invention,
La fig.5 est un schéma illustrant un procédé d'obtention d'une courroie de l'invention.

### Description d'un mode de réalisation préférentiel

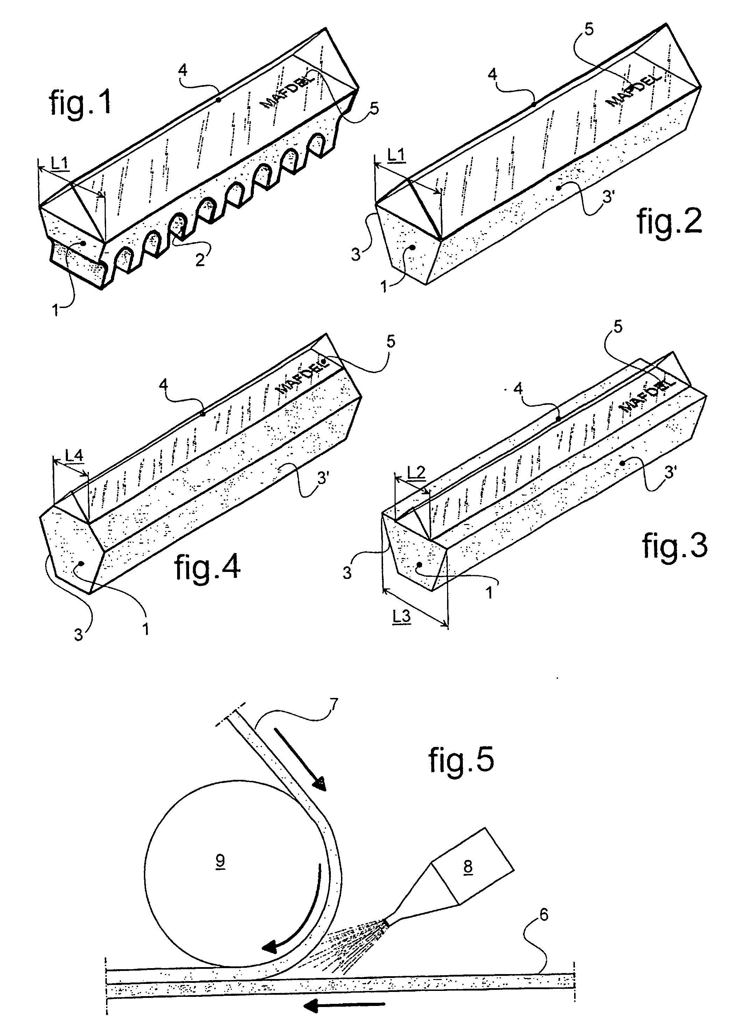

Sur les fig1 à fig.4, une courroie de l'invention comprend un corps allongé 1 prévu pour être refermé en boucle sur lui-même. Ce corps comporte des aménagements 2 ou 3,3' pour son entraînement en rotation. Ces aménagements sont par exemple constitués d'un crantage 2 prévu pour coopérer avec une roue crantée, tel qu'illustré sur la fig.1 ; ces aménagements sont par exemple encore plus simplement formés par les parois latérales 3,3' du corps 1, prévues pour coopérer avec des flasques d'une roue à friction, tel qu'illustré sur les fig.2 à fig.4.

Les courroies représentées sur les fig.1 à fig.4 comportent en outre une crête 4 effilée vers le haut, qui rehausse le corps 1. Cette crête 4, massive, est destinée à soutenir des articles pour leur convoyage.

Les matières à partir desquelles sont formés respectivement le corps 1 et la crête 4 pour chacune des courroies illustrées, peuvent être différentes. La matière de la crête 4 est plus souple que celle du corps 1, afin de ne pas interférer sur les caractéristiques mécaniques du corps 1 de la courroie, notamment pour ne pas altérer la tenue générale de cette dernière.

Il est aussi possible d'utiliser des matières similaires, mais avec des duretés différentes. A titre d'exemples, le corps 1 peut être du polyuréthane ayant une dureté de 80 à 95 ShA. La crête plus souple peut être du polyuréthane ayant une dureté de 60 à 70 ShA. Toute autre matière en élastomère peut bien entendu utilisée.

Selon les variantes préférées illustrées, le profil de la crête 4 est triangulaire.

Sur les fig.1 et fig.3, le corps 1 de la courroie est évasé vers le haut. Selon les variantes illustrées sur les fig.1 et fig.2, la largeur L1 de la crête 4 à sa base est équivalente à la plus grande largeur du corps 1, tandis que sur la variante illustrée sur la fig.3, la largeur L2 de la crête 4 est plus petite que celle L3 du corps.

Sur la fig.4, le corps 1 de la courroie comporte un double évasement successivement inversé. La largeur L4 de la crête 4 à sa base est de préférence équivalente à celle du sommet du corps 1.

La crête 4 est avantageusement en matière transparente, pour notamment laisser apparaître une inscription 5 portée au sommet du corps 1.

Sur la fig.5, la crête 4 est rapportée par soudage sur le corps 1.

Pour cela, il est proposé de mélanger intimement les matières constituant le corps 1 et la crête 4, après mise en fusion superficielle de leur surface de contact respective.

Plus particulièrement, un procédé de fabrication d'une courroie de l'invention consiste à effectuer les opérations suivantes :
a) dérouler en continu et en superposition des bandes 6 et 7 correspondantes respectivement au corps 1 et à la crête 4 de la courroie,
b) chauffer en amont de la superposition des bandes 6 et 7 leur surface de contact au moyen d'un chalumeau à air chaud 8, puis
c) plaquer les bandes 6 et 7 l'une contre l'autre, au moyen d'un tambour presseur 9.

On notera que la température de chauffe des bandes 6 et 7 est de l'ordre de 600°C.

## Revendications

1. Courroie monobloc en matière plastique, pour le convoyage et le transport d'articles ou de matériaux, comprenant d'une part un corps allongé (1) prévu pour être refermé en boucle sur lui-même, et aménagé (2,3,3') pour son entraînement par des moyens moteurs avec lesquels il coopère, et d'autre part au moins une crête (4) effilée vers le haut, dont la pointe forme une surface réduite de portance des articles, **caractérisée :**
**en ce que** le corps (1) et la crête (4) sont en matières différentes, la matière de la crête (4) étant plus souple que celle du corps (1),
de telle sorte que la déformabilité de la courroie tende à être équivalente à celle d'une même courroie exempte de crête.

2. Courroie selon la revendication 1, **caractérisée :**
**en ce que** le rapport de dureté entre le corps (1) et la crête (4) est compris entre 1, 1 et 1, 6.

3. Courroie selon la revendication 1 ou 2, **caractérisée :**
**en ce que** la crête (4) est en polyuréthane avec une dureté de 60 à 70 ShA, alors le corps (1) est constitué d'un polyuréthane avec une dureté de 80 à 95 ShA.

4. Courroie selon la revendication 1, **caractérisée :**
**en ce que** la crête (4) est rapportée par soudage sur le corps (1).

5. Courroie selon l'une quelconque des revendications précédentes, **caractérisée:**
**en ce que** le profil de la crête (4) est triangulaire.

6. Courroie selon la revendication 5, **caractérisée :**
**en ce que**, le corps (1) de la courroie étant évasé vers le haut, la largeur (L1) de la crête (4) à sa base est équivalente à la plus grande largeur du corps (1).

7. Courroie selon la revendication 5, **caractérisée :**
**en ce que**, le corps (1) comportant un double évasement successivement inversé, la largeur (L4) de la crête à sa base est équivalente à celle du sommet du corps (1).

8. Courroie selon l'une quelconque des revendications précédentes, caractérisée, **caractérisée :**
**en ce que** la crête (4) est en matière transparente pour laisser apparaître une inscription (5) portée au sommet du corps (1).

9. Procédé de fixation d'une crête sur un corps d'une courroie selon la revendication 4, **caractérisé :**
**en ce qu'**il consiste en un mélange intime entre les matières constituant le corps (1) et la crête (4), après mise en fusion superficielle de leur surface de contact respective.

10. Procédé selon la revendication 9, **caractérisé :**
**en ce qu'**il consiste à effectuer les opérations suivantes :
d) dérouler en continu et en superposition des bandes (6,7) correspondantes respectivement au corps (1) et à la crête (4) de la courroie,
e) chauffer, en amont de la superposition des bandes (6,7), leur surface de contact au moyen d'un chalumeau à air chaud (8), puis
f) plaquer les bandes (6,7) l'une contre l'autre au moyen d'un tambour presseur (9).

## Patentansprüche

1. Einstückiger Riemen aus Kunststoff für die Förderung und den Transport von Artikeln oder Materialien, der einerseits einen länglichen Körper (1) umfasst, der als Endlosriemen vorgesehen und so ausgestattet (2, 3, 3') ist, dass er mit Antriebsmitteln angetrieben kann, mit denen er zusammenwirkt, sowie andererseits mindestens einen Kamm (4), der sich nach oben hin verjüngt, dessen Spitze eine verringerte Tragfläche für die Artikel bildet,
**dadurch gekennzeichnet, dass** der Körper (1 ) und der Kamm (4) aus unterschiedlichen Materialien bestehen, wobei das Material des Kamms (4) elastischer ist als das des Körpers (1),
sodass die Verformbarkeit des Riemens in etwa gleich derjenigen eines gleichen Riemens ohne Kamm ist.

2. Riemen nach Anspruch 1,
**dadurch gekennzeichnet, dass** das Härteverhältnis zwischen Körper (1) und Kamm (4) vorzugsweise 1,1 bis 1,6 beträgt.

3. Riemen nach Anspruch 1 oder 2,
**dadurch gekennzeichnet, dass** der Kamm (4) aus Polyurethan mit einer Härte von 60 bis 70 ShA besteht, während der Körper (1) aus einem Polyurethan mit einer Härte von 80 bis 95 ShA besteht.

4. Riemen nach Anspruch 1,
**dadurch gekennzeichnet, dass** der Kamm (4) an den Körper (1) angeschweißt ist.

5. Riemen nach einem der vorstehenden Ansprüche,
**dadurch gekennzeichnet, dass** das Profil des Kamms (4) dreieckig ist.

6. Riemen nach Anspruch 5,
**dadurch gekennzeichnet, dass**, nachdem der Körper (1) des Riemens nach oben hin erweitert ist, die Breite (L1) des Kamms (4) an seinem Ansatz gleich der größten Breite des Körpers (1) ist.

7. Riemen nach Anspruch 5,
**dadurch gekennzeichnet, dass**, nachdem der Körper (1) eine nacheinander umgekehrte doppelte Erweiterung umfasst, die Breite (L4) des Kamms an seinem Ansatz gleich derjenigen der Spitze des Körpers (1) ist.

8. Riemen nach einem der vorstehenden Ansprüche,
**dadurch gekennzeichnet, dass** der Kamm (4) aus durchsichtigem Material besteht, damit eine an der Spitze des Körpers (1) angebrachte Inschrift (5) sichtbar ist.

9. Verfahren zur Anbringung eines Kamms auf einem Körper eines Riemens nach Anspruch 4,
**dadurch gekennzeichnet, dass** eine enge Vermengung der Materialien besteht, aus denen der Körper (1) und der Kamm (4) gefertigt sind, nach einer Oberflächenschmelzung ihrer jeweiligen Kontaktflächen.

10. Verfahren nach Anspruch 9,
**dadurch gekennzeichnet, dass** es in der Durchführung folgender Schritte besteht:
d) kontinuierliches Abrollen der jeweiligen Bänder (6, 7) übereinander auf den Körper (1) und den Kamm (4) des Riemens,
e) vor dem Übereinanderlegen der Bänder (6, 7) Erhitzen ihrer Kontaktflächen mittels eines Heißluftbrenners (8), dann
f) Pressen der Bänder (6, 7) mittels einer Druckwalze (9) gegeneinander.

## Claims

1. Monoblock belt made of plastic material for conveying and transporting articles or materials, comprising on the one hand an elongate body (1) designed to be looped on itself and arranged (2,3,3') to be driven by driving means wherewith it co-operates, and on the other hand at least one upwardly tapered ridge (4), the peak whereof forms a reduced surface for carrying the articles, **characterized in that** the body (1) and ridge (4) are made of different materials, the material of the ridge (4) being more flexible than that of the body (1), so that the deformability of the belt tends to be equivalent to that of the same belt without a ridge.

2. Belt according to claim 1, **characterized in that** the hardness ratio between the body (1) and ridge (4) is comprised between 1.1 and 1.6.

3. Belt according to claim 1 or 2, **characterized in that** the ridge (4) is made of polyurethane with a hardness of 60 to 70 ShA whereas the body (1) is made of a polyurethane with a hardness of 80 to 95 ShA.

4. Belt according to claim 1, **characterized in that** the ridge (4) is incorporated onto the body (1) by welding.

5. Belt according to any one of the foregoing claims 1, **characterized in that** the profile of the ridge (4) is triangular.

6. Belt according to claim 5, **characterized in that** the body (1) of the belt being upwardly tapered, the width (L1 ) of the ridge (4) at its base is equivalent to the largest width of the body (1).

7. Belt according to claim 5, **characterized in that** the body (1) comprising a successively inverted double taper, the width (L4) of the ridge at its base is equivalent to that of the top of the body (1)

8. Belt according to any one of the foregoing claims, **characterized in that** the ridge (4) is made of transparent material to display an inscription (5) made on the top of the body (1).

9. Fixing process of a ridge on a body of a belt according to claim 4, **characterized in that** it consists of an intimate mixture between the materials constituting the body (1) and the ridge (4), after superficial fusion of their respective contact surfaces has been performed.

10. Belt according to claim 9, **characterized in that** it consists in performing the following operations:
d) continuous unwinding in superposition of the bands (6,7) corresponding respectively to the body (1) and ridge (4) of the belt,
e) heating the contact surfaces of the bands (6,7), prior to superposition thereof, by means of a blow-lamp (8), then
f) pressing the bands (6,7) against one another by means of a pressing drum (9).
